# EUROPEAN PATENT APPLICATION

(11) **EP 4 776 483 A1**
(43) Date of publication of application: **15.07.2026**
(21) Application number: 25151537.5
(22) Date of filing: 13.01.2025
(51) Int. Cl.: H02K 1/32, F16H 57/04, H02K 5/20, H02K 7/16, H02K 9/19, H02K 7/116

(54) **ELECTRICAL DRIVE AXLE**

(71) Applicant: ZF Friedrichshafen AG, 88046 Friedrichshafen (DE)
(72) Inventor: Dong, Ye, Shanghai, 201615 (CN)
(74) Representative: WBH Wachenhausen Patentanwälte PartG mbB

(57) **Abstract**

The invention relates to an electrical drive axle (2) for a vehicle (1). The electrical drive axle (2) comprises an electrical motor (10) and a gearing (3). The electrical motor (10) comprises a rotor (11) mechanically connected to a rotor shaft (12). The gearing (3) comprises an input shaft (4) and an output shaft (5). The output shaft (5) is arranged coaxially to the rotor shaft (12). The input shaft (4) is operatively connected to the rotor shaft (12). The output shaft (5) is configured to receive cooling fluid. The output shaft (5) is also configured to enable at least a part of the received cooling fluid to flow from the output shaft (5) to the rotor shaft (12) for cooling the rotor (11). The invention also relates to a vehicle (1) with the electrical drive axle (2).

## Description

### Technical field

The present invention relates to an electrical drive axle and a vehicle having such an electrical drive axle.

### Prior art

Drive axles for vehicles are known. In some cases, the drive axle is provided with an electrical motor for converting electrical power into mechanical power for driving the vehicle. In such electrical motors, significant thermal losses may arise in a rotor and/or a stator of the electrical motor. The available cooling capacity for absorbing the thermal losses may be limiting to the achievable power density under certain conditions.

### Summary of the invention

The present disclosure relates in a first aspect to an electrical drive axle for a vehicle. Examples of the vehicle may include a car, a truck, a bus and a working vehicle. Examples for the working vehicle may include a tractor, a combine harvester, a communal vehicle like a street sweeping machine, an excavator, a grader and a loader. The electrical drive axle may be configured to convert electrical power into mechanical power for driving the vehicle. The electrical drive axle may be provided as an axle of the vehicle, for example a front axle or a rear axle of the vehicle. The electrical drive axle may comprise one or more output shafts. At least one output shaft of the electrical drive axle may be mechanically operatively connected to a drive element of the vehicle. If two elements are mechanically operatively connected, the elements are directly or indirectly coupled to each other so that a movement of one element causes a reaction of the other element. A mechanical operative connection can be established, for example, by frictional engagement or geometric fit. The mechanical operative connection can correspond to a meshing between corresponding gears of the two elements. Further elements, such as shafts, constant velocity joints and/or one or more gear sets, may be present between the elements. The electrical drive axle may comprise a distribution gearing for distributing power between two output shafts. The drive element may be, for example, a wheel for contacting the ground or a drive wheel or sprocket for tracks. The vehicle may comprise a shiftable transmission disposed in a power flow between the electrical motor and the drive element.

The electrical drive axle comprises an electrical motor. The electrical motor comprises a rotor mechanically connected to a rotor shaft. The rotor may be connected non-rotatably to the rotor shaft. Alternatively, the mechanical connection between the rotor and the rotor shaft may be configured to allow some slip. The rotor shaft may extend at least partly through the electrical motor. The electrical motor may be configured to convert an input electrical power into an output power applied to the rotor shaft. Further to the rotor, the electrical motor may comprise a stator. The stator may be permanently non-rotatably connected to a stationary member. At least one of the rotor and the stator may be provided for inducing a magnetic field. At least one of the rotor and the stator may be provided with permanent magnets. In one example, the rotor comprises permanent magnets and the stator comprises windings for inducing a magnetic field. The electrical motor may receive electrical energy from an energy source, for example a battery or a fuel cell, and convert it to rotational mechanical energy, for example to a driving torque for the rotor shaft.

The electrical drive axle comprises a gearing. The gearing comprises an input shaft and an output shaft. The output shaft is arranged coaxially to the rotor shaft. The rotor shaft may be formed as a hollow shaft. The output shaft may extend at least partly through the rotor shaft. In one example, the output shaft extends along and beyond the whole axial length of the rotor shaft. The input shaft is operatively connected to the rotor shaft. In one example, the input shaft and the rotor shaft may be integrally formed. In another example, the input shaft may be permanently or selectively non-rotatably connected to the rotor shaft. In another example, a transmission may be interposed between the input shaft and the rotor shaft. Thereby, the input shaft may be configured for directly or indirectly receiving input, for example a rotational speed and a torque, from the rotor shaft.

The gearing may be configured for converting an input value into an output value. For example, the gearing may be able to convert an input rotational speed into a lower or higher output rotational speed and an input torque into a higher or lower output torque. The gearing may be configured to distribute power applied to the input shaft between the output shaft and a further output shaft. The gearing may comprise one or more gear sets configured to convert torques and rotational speeds from one value to another. The gear set or sets may be formed as spur gears, planetary gears, bevel gears or other suitable gears. A housing may be provided as one or several casings for enclosing stationary and/or rotational components of the gearing and/or the electrical motor. The housing may also be configured as a stationary member for providing support and for receiving forces and torques. The housing may comprise several detachable housing portions. Each housing portion may be configured to accommodate and support different components. For example, the housing may comprise one or more housing portions for enclosing and rotatably supporting the gearing. For example, the housing may comprise one or more housing portions for enclosing and rotatably supporting the electrical motor. The exemplary housing portions may be mounted to each other or formed integrally with each other.

The output shaft is configured to receive cooling fluid. The output shaft may be configured to receive cooling fluid from a stationary member. Alternatively or additionally, the output shaft may be configured to receive cooling fluid from a rotating element, for example another shaft. The output shaft may be configured to receive cooling fluid by comprising a receiving channel, into which the cooling fluid can be introduced. The element supplying the cooling fluid, for example the stationary member or the other shaft, may supply the cooling fluid directly, for example via a supply channel or a rotary feedthrough, or indirectly, for example by ejecting the fluid to be received by the output shaft. The cooling fluid may be provided as a fluid suitable for absorbing heat with a high thermal capacity. The cooling fluid may optionally serve as a lubricant for parts of the electrical drive axle. For example, the cooling fluid may comprise a lubricating oil. In another example, the cooling fluid may be configured for cooling only, for example as water or a water glycol mixture. The cooling fluid may be also used for cooling and/or lubricating the gearing. The cooling fluid may be provided by a fluid supply unit which may comprise at least one of a tank, a pump, a filter and piping. The cooling fluid may be provided by a cooling and/or lubricating circuit of the vehicle or may be provided as a separate circuit.

The output shaft is further configured to enable at least a part of the received cooling fluid to flow from the output shaft to the rotor shaft for cooling the rotor. The output shaft may be formed to provide a fluid communication path between the above-described receiving channel and at least one surface of the rotor shaft. For this purpose, the output shaft may comprise fluid connections such as channels and cavities. In one example, the receiving channel may be formed as an axially extending channel. A connecting channel may be provided radially so as to connect the receiving channel with an outer circumferential surface of the output shaft. An inner circumferential surface of the rotor shaft may be arranged to face the outer circumferential surface of the output shaft so as to form a cavity between the rotor shaft and the output shaft. In any case, the output shaft is configured to guide at least a part of the received cooling fluid to contact the rotor shaft for the purpose of cooling the rotor. The cooling of the rotor may be carried out directly, for example by the rotor shaft guiding the cooling fluid through the rotor, or indirectly, for example by cooling the rotor shaft and by having the rotor shaft in thermal contact with the rotor.

With the electrical drive axle according to the first aspect, it is possible to cool the rotor with a high efficiency. Accordingly, it is possible to increase the power density of the electrical motor and the electrical drive axle. By using the output shaft to provide cooling fluid to the rotor shaft for cooling the rotor, an especially compact configuration is provided. Thus, the electrical drive axle of the first aspect achieves a high power output at compact outer dimensions.

In an embodiment, the electrical drive axle comprises a heat exchange path for guiding at least a part of the received cooling fluid along a surface of the rotor shaft so as to cool the rotor shaft. The surface may be an inner circumferential surface of the rotor shaft as described above or any other suitable surface of the rotor shaft. The heat exchange path may provide a flow path for the cooling fluid along the rotor shaft so as to enable a heat exchange between the cooling fluid and the rotor shaft. The heat exchange path may provide an axially extending flow path. Additionally or alternatively, the heat exchange path may provide a radially extending flow path. The flow path may also comprise components in a circumferential direction of the rotor shaft. The heat exchange path may comprise structures for extending a path length so as to improve the heat exchange efficiency. The heat exchange path may comprise structures for increasing turbulence in the cooling fluid so as to improve heat exchange. The heat exchange path may be delimited at least partly by the rotor shaft. The heat exchange path may be also delimited at least partly by the output shaft and/or other elements. By means of the heat exchange path, the cooling efficiency for cooling the rotor is increased.

In an embodiment, the heat exchange path is formed as an annular cavity. The annular cavity may be arranged radially between the output shaft and the rotor shaft. The annular cavity may extend in an axial direction. The axial direction may be an axial direction of the rotor shaft, to which the output shaft is coaxially arranged. The annular cavity may be delimited in a radial direction by the output shaft on an inner side and by the rotor shaft on an outer side. The annular cavity may be delimited in the axial direction by at least one of the output shaft, the rotor shaft, another shaft and some sealing elements. In one example, one axial end of the annular cavity is delimited by a step formed on an inner circumferential surface of the rotor shaft. In one example, one axial end of the annular cavity may be delimited by a step formed in an outer circumferential surface of the output shaft. The annular cavity may be in fluid communication with the receiving channel of the output shaft for receiving at least part of the received cooling fluid, for example via channels. The annular cavity may be sealed so as to prevent any discharge of the cooling fluid it has received or may allow a small leakage thereof. The annular cavity may be configured for subjecting the cooling fluid it has received to a heat exchange with the rotor shaft and thus the rotor. The annular cavity may comprise the above-described structures for improving heat exchange. By means of the annular cavity, cooling efficiency is improved with a simple structure.

In an embodiment, the electrical drive axle comprises a bearing for rotatably supporting the rotor shaft with respect to an element of the gearing. The element of the gearing may be an element for transferring torque. The element of the gearing may be an element mechanically connected to the output shaft, for example for transferring torque, axial forces and/or radial forces. In one example, the element of the gearing may be a planetary carrier axially and non-rotatably connected to the output shaft. The bearing may be configured to allow relative rotation between the element of the gearing and the rotor shaft while transferring an axial force and/or a radial force between the element of the gearing and the rotor shaft. The bearing may be formed as, for example, a radial bearing, an axial bearing or a combined bearing. A radial bearing may be configured for transferring radial loads while allowing axial displacement. An axial bearing may be configured for transferring axial loads while allowing radial displacement. A combined bearing may be configured for transferring both radial and axial loads. The bearing may be formed as a single bearing element or a group of several bearing elements. Examples for the bearing include angular contact ball bearings, conical bearings, cylindrical roller bearings, tapered roller bearings, axial roller bearings and plane bearings. In one example, the bearing may be formed as an axial needle bearing. In another example, the bearing may be formed as deep groove ball bearing or a cylindrical roller bearing. The bearing may be provided directly between the element of the gearing and the rotor shaft or with other elements interposed therebetween.

In the present embodiment, the output shaft is configured to enable at least a part of the received cooling fluid to flow through the output shaft for lubricating the bearing. For example, the output shaft may comprise a fluid communication path between the above-described receiving channel and the bearing. For example, the output shaft may comprise a lubrication channel extending from the receiving channel to an outer surface of the output shaft in the vicinity of the bearing. In one example, the bearing and the lubrication channel for lubricating the bearing may overlap along the axial direction. By means of the present embodiment, lubrication of the bearing may be achieved in addition to the cooling effect of the rotor, thereby simplifying the structure of the electrical drive axle and improving its efficiency.

In an embodiment, the electrical drive axle comprises an output shaft bearing for rotatably supporting the output shaft with respect to a stationary member. The stationary member may be provided as the stationary member described above or as a separate stationary member. The output shaft bearing may be configured as described above for the bearing rotatably supporting the output shaft with respect to the rotor shaft. In one example, the output shaft bearing may be configured as a combined axial and radial bearing for transferring axial and radial forces from the output shaft to the stationary member. The bearing and the output shaft bearing may be configured to be the same or different from each other. In the present embodiment, the output shaft is configured to enable at least a part of the received cooling fluid to flow through the output shaft for lubricating the output shaft bearing. For example, the output shaft may be configured to provide a fluid communication path from the receiving channel to the output shaft bearing. In this regard, reference is made to the above descriptions concerning the bearing supporting the output shaft with respect to the rotor shaft.

In an embodiment, the electrical drive axle comprises a rotor shaft bearing for rotatably supporting the rotor shaft with respect to a stationary member. The stationary member may be provided as the stationary member described above or as a separate stationary member. The rotor shaft bearing may be configured as described above for the bearing rotatably supporting the output shaft with respect to the rotor shaft. The bearing and the rotor shaft bearing may be configured to be the same or different from each other. In the present embodiment, at least one of the output shaft and the rotor shaft is configured to enable at least a part of the received cooling fluid to flow through the at least one of the output shaft and the rotor shaft for lubricating the rotor shaft bearing. In one example, the output shaft may provide a fluid communication path as described above for lubricating the rotor shaft bearing. The fluid communication path in this example may not pass through the rotor shaft. For example, the output shaft may comprise a channel connecting the receiving channel to an outer circumferential surface of the output shaft at a location where the rotor shaft does not overlap the output shaft. In another example, the rotor shaft may provide the fluid communication path for lubricating the rotor shaft bearing. For example, the rotor shaft may comprise a channel extending radially through the rotor shaft to an outer circumferential surface of the rotor shaft in a vicinity of the rotor shaft bearing. This channel may be directly or indirectly in fluid communication with the receiving channel of the output shaft. For example, this channel may open to the above-described annular cavity. The foregoing examples may be provided independently from each other. In one configuration, the output shaft is configured to provide the fluid communication path for lubricating a rotor shaft bearing on one axial end of the rotor shaft, and the rotor shaft is configured to provide a fluid communication path for lubricating another rotor shaft bearing at another axial end of the rotor shaft.

In an embodiment, the electrical drive axle is configured to enable at least a part of the received cooling fluid to flow through at least one of the output shaft and the rotor shaft for lubricating an element of the gearing. For example, a fluid communication path may be provided between the receiving channel and the element of the gearing. The fluid communication path may include at least some of a channel extending through the output shaft, the above-described annular cavity and a channel extending through the rotor shaft. The element of the gearing may be any element of the gearing, for example a gear, a bearing, a shaft or any other element requiring lubrication. In one example, the gearing may comprise a planetary gearset and a planetary carrier may be the lubricated element of the gearing.

In an embodiment, the electrical drive axle comprises a cooling jacket for cooling a stator of the electrical motor by means of a coolant flowing through the cooling jacket. The stator of the electrical motor may be permanently non-rotatably connected to a stationary member as described above. The stator may comprise windings, for example conducting windings, for generating a magnetic field in the stator. The cooling jacket may be arranged in direct or indirect thermal contact with the stator. In case of a direct thermal contact, the cooling jacket may contact the stator. In case of an indirect contact, intermediate elements may be interposed between the cooling jacket and the stator. The intermediate elements may comprise a separate insulating member and/or a part of the stationary member. The insulating member may be provided for electrically insulating the stator and the stationary member. In one example, the cooling jacket may be provided as an annular member arranged on an inner side of the stationary member so as to form a coolant cavity between the cooling jacket and the stationary member. The coolant may flow through the coolant cavity so as to absorb heat from the cooling jacket. Thereby, the coolant may also absorb heat from the stator so as to cool the stator. The coolant may be a water-based coolant, for example water or a water-glycol mixture. The coolant may be provided as part of a cooling circuit of the vehicle or a separate cooling circuit. The cooling circuit may include at least one of a pump, a tank, a filter, coolant piping and a heat exchanger or cooler. By cooling the stator with the coolant in addition to cooling the rotor with the cooling fluid, the efficiency of the electrical drive axle can be further improved.

In an embodiment, the electrical drive axle comprises a heat exchanger for exchanging heat between the cooling fluid and the coolant. Thereby, the overall cooling capacity may be increased. Furthermore, in case the cooling fluid is also used for lubrication, it may be advantageous to increase its temperature to an operating temperature more quickly. By providing the heat exchanger, residual heat from the stator can be transferred to the cooling fluid so as to more quickly increase its temperature to the operating temperature.

In an embodiment, the electrical drive axle comprises a sump and a drain channel for draining cooling fluid into the sump. The sump may be provided at a lower end of the electrical drive axle with respect to the ground direction. The drain channel may be formed in the stationary member, for example. A single drain channel or a plurality of drain channels may be provided. Cooling fluid drained via the drain channel into the sump may comprise at least parts of the received coolant fluid. The drained cooling fluid may comprise additional cooling fluid that has been provided to elements of the electrical motor and/or the gearing.

In an embodiment, the electrical drive axle comprises a supply channel formed in a housing portion of the gearing for supplying at least the output shaft with cooling fluid. The housing portion of the gearing may be a housing portion configured to enclose and/or rotatably support the gearing. The supply channel may be formed along a wall of the gearing, for example between an inner surface and an outer surface of the wall. Alternatively or additionally, the supply channel may be formed along the wall at least partly outside the wall. The supply channel may be in fluid communication with a cooling fluid pump. The cooling fluid pump may be mechanically or electrically driven for providing a cooling fluid flow with a predetermined pressure. In one example, the cooling fluid pump may be provided in fluid communication with the sump, for example by being arranged in the sump. The supply channel may be formed in the above-described stationary member. Alternatively or additionally, the supply channel may extend through other elements, for example shafts like the output shaft and the rotor shaft. A plurality of supply channels may be provided. The plurality of supply channels may be at least partly in fluid communication with each other.

In an embodiment, the gearing comprises a first planetary gear set and a second planetary gear set. The first planetary gear set may comprise at least a first element, a second element and a third element. The second planetary gear set may comprise at least a first element, a second element and a third element. The input shaft may be non-rotatably connected to the first element of the first planetary gear set. The second element of the first planetary gear set may be non-rotatably connected to the output shaft. The third element of the first planetary gear set may be non-rotatably connected to the first element of the second planetary gear set. The second element of the second planetary gear set may be non-rotatably connected to a stationary member. The third element of the second planetary gear set may be non-rotatably connected to a further output shaft.

A permanent non-rotatable connection is a connection in which the two elements are rigidly coupled together. The elements may be formed as separate elements connected to each other in a non-rotatable manner or integrally. A non-rotatable connection between two elements may also be established by a switching element, e.g. a clutch or a brake. The non-rotatable connection may be established when the switching element is actuated. The non-rotatable connection may be released when the switching element is no longer actuated. The first, second and third elements, for example, may each be a sun gear, a planetary carrier or a ring gear of the respective planetary gear set. The respective planetary gear set may be a plus or a minus planetary gear set. Each of the planetary gear sets may have planetary gears that may be rotatably mounted on the respective planetary carrier of the one planetary gear set. The planetary gears may mesh with both the sun gear and the ring gear of the respective planetary gear set. With the configuration of the gearing according to the present embodiment, a power distribution function for distributing power between the output shaft and the further output shaft is provided with a simple and compact configuration. In an alternative embodiment, the further output shaft is omitted and the third element of the second planetary gear set is non-rotatably connected to the second element of the first planetary gear set instead of the further output shaft. Thereby, a gearing with a particularly high transmission ratio is provided.

In an embodiment, each first element of the planetary gear sets is a sun gear, each second element of the planetary gear sets is a planetary carrier and each third element of the planetary gear sets is a ring gear. The ring gear of the first planetary gear set may be formed integrally with the sun gear of the second planetary gear set. Thereby, a gearing with compact dimensions can be provided.

In an embodiment, at least one planetary carrier comprises a planetary pin configured to receive cooling fluid from a housing portion of the electrical motor and to enable a flow of at least a part of the cooling fluid received by the planetary pin to a planetary bearing mounted on the planetary pin. The planetary bearing may be provided as a needle bearing. The planetary bearing may be mounted on the planetary pin and may be configured for rotatably supporting a planet on the planetary pin. The planetary pin may be configured to provide a flow path for guiding cooling fluid to the planetary bearing. For example, the planetary pin may comprise a distribution channel for receiving the cooling fluid, for example from a supply channel. The distribution channel may be configured to receive the cooling fluid in the same manner as described above with respect to the receiving channel in the output shaft. In one example, the distribution channel may be configured to receive cooling fluid provided by a supply channel formed in the housing and ejected by an ejecting device formed as a nozzle. Multiple ejecting devices may be provided along a ring channel provided at or near the same radial height as the planetary pins. Such a structure may ensure that the planetary pins receive a sufficient amount of cooling fluid for lubricating the planetary bearing.

In a second aspect, the present disclosure relates to a vehicle. The vehicle comprises an electrical drive axle according to the first aspect. The respective advantages and further features can be taken from the description of the first aspect, wherein embodiments of the first aspect also form embodiments of the second aspect and vice versa.

### Brief description of drawings

Figure 1 shows a vehicle with an electrical drive axle according to an embodiment of the present disclosure.
Figure 2 schematically shows a general layout of the electrical drive axle of the vehicle of Figure 1.
Figure 3 schematically shows the electrical drive axle shown in Figure 2 according to an embodiment.

### Detailed description of embodiments

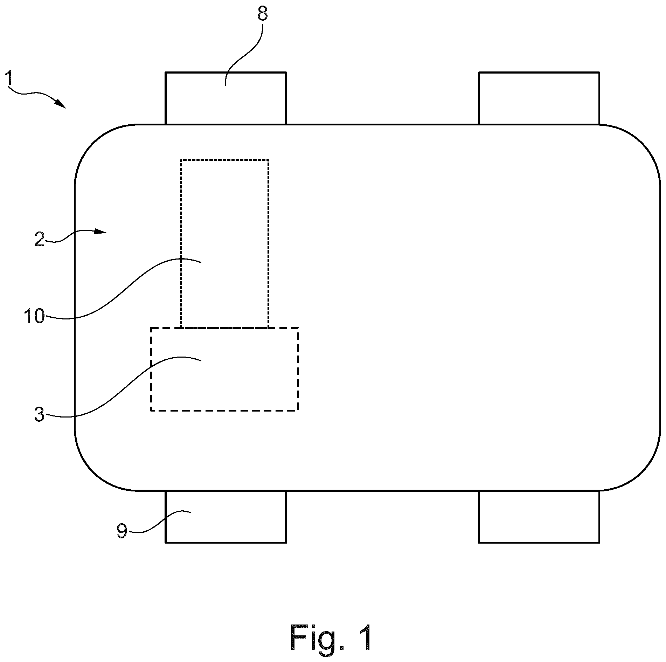

Figure 1 shows a vehicle 1 with an electrical drive axle 2 according to an embodiment of the present disclosure. The electrical drive axle 2 comprises a gearing 3 and an electrical motor 10. In the present embodiment, the gearing 3 is configured for transferring power input by the electrical motor 10 to at least two drive elements 8, 9.

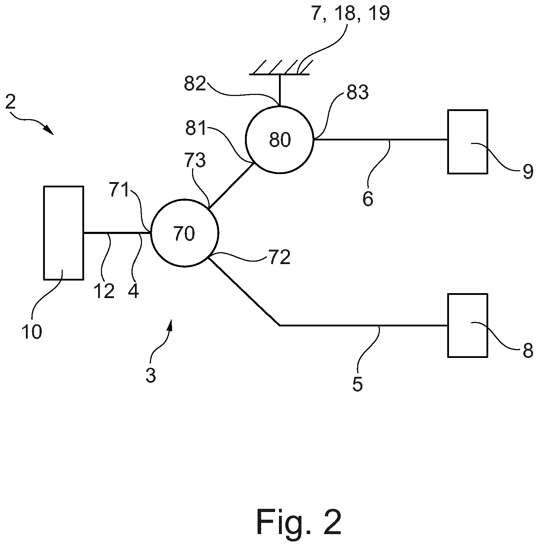

Figure 2 schematically shows a general layout of the electrical drive axle 2 according to an embodiment of the present disclosure. In the present embodiment, the gearing 3 of the electrical drive axle 2 is a distribution gearing with two planetary gear sets. As can be seen from Figure 2, the gearing 3 comprises a first planetary gear set 70 having a first element 71, a second element 72 and a third element 73. Furthermore, the gearing 3 comprises a second planetary gear set 80 having a first element 81, a second element 82 and a third element 83. A torque of the electrical motor 10 can be introduced into the gearing 3 via the first element 71 of the first planetary gear set 70. For this purpose, a rotor shaft 12 driven by the electrical motor 10 is permanently non-rotatably connected to an input shaft 4, here by being integrally formed. The input shaft 4 is mechanically operatively connected to the first element 71 of the first planetary gear set 70, here by being permanently non-rotatably connected. The third element 73 of the first planetary gear set 70 is permanently non-rotatably connected to the first element 81 of the second planetary gear set 80, here by being integrally formed. The second element 82 of the second planetary gear set 80 is permanently non-rotatably fixed to a stationary member 7, 18, 19. An output shaft 5 is mechanically operatively connected to the second element 72 of the first planetary gear set 70, in this case permanently non-rotatably connected, for outputting power to a first drive element 8. A further output shaft 6 is mechanically operatively connected to the third element 83 of the second planetary gear set 80, in this case permanently non-rotatably connected, for outputting power to a second drive element 9.

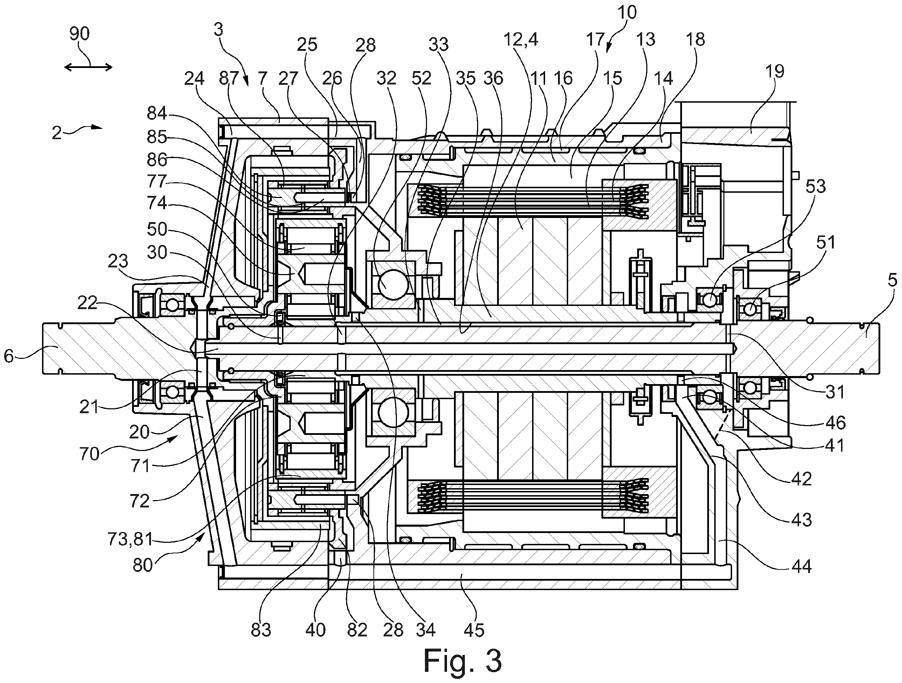

Figure 3 schematically shows the electrical drive axle 2 shown in Figure 2 according to an embodiment. The electrical drive axle 2 comprises the gearing 3 and the electrical machine 10. The gearing 3 comprises the first planetary gear set 70 and the second planetary gear set 80. Each first element 71, 81 of the planetary gear sets 70, 80 is formed as a sun gear. Each second element 72, 82 of the planetary gear sets 70, 80 is formed as a planetary carrier. Each planetary carrier 72, 82 comprises a plurality of planetary pins 74, 84. On each planetary pin 74, 84, a planetary bearing 77, 87, currently formed as needle bearing, is provided for rotatably supporting a respective planet. Each third element 73, 83 of the planetary gear sets 70, 80 is formed as a ring gear. In the present embodiment, the ring gear 73 of the first planetary gear set 70 is formed integrally with the sun gear 81 of the second planetary gear set 80.

The stationary member 7, 18, 19 is presently provided with three housing portions. A first housing portion 7 is configured to rotatably support the further output shaft 6 and to accommodate most of the gearing 3. A second housing portion 18 is configured to rotatably support the rotor shaft 12 and to accommodate the electrical motor 10. Furthermore, the planetary carrier 82 of the second planetary gear set 80 is permanently non-rotatably supported on the second housing portion 18. In the present embodiment, the rotor shaft 12 is rotatably supported in the second housing portion 18 by a first rotor shaft bearing 52. A third housing portion 19 is presently configured to support the rotor shaft 12 by means of a second rotor shaft bearing 53. Furthermore, the third housing portion 19 is configured to rotatably support the output shaft 5 by means of an output shaft bearing 51. In addition, the output shaft 5 is rotatably supported with respect to the rotor shaft 12 and the input shaft 4 by means of a bearing 50. In the present disclosure, the terms "first", "second", "third" etc. are used merely for ease of reference and their order is arbitrary, unless otherwise specified. Regardless of the designation, all or only some of such referenced features may be provided. For example, a second housing portion can be provided without first and third_housing portions. The same applies to the bearings described in the foregoing and to fluid channels described in the following.

The electrical motor 10 comprises a rotor 11 and a stator 13. The rotor 11 is permanently non-rotatably connected to the rotor shaft 12. The rotor 11 is configured to generate torque from a magnetic field provided by the stator 13 and to apply the generated torque to the rotor shaft 12. The rotor shaft 12 is presently integrally formed with the input shaft 4 of the gearing 3. The stator 13 comprises a plurality of windings 14 for generating the magnetic field. The stator 13 is permanently non-rotatably supported in the second housing portion 18 as a stationary member. In the present embodiment, the stator 13 is in thermal contact with a cooling jacket 16 arranged on an inner side of the second housing portion 18. The cooling jacket 16 is presently formed as an annular member defining a plurality of coolant cavities 17 between the cooling jacket 16 and the second housing portion 18. Coolant is provided by a cooling circuit (not shown) to flow through the coolant cavities 17 so as to cool the cooling jacket 16 and the stator 13. An insulating member 15 for electrically insulating the stator 13 while maintaining its thermal contact to the cooling jacket 16 is provided in a radial space between the stator 13 and the cooling jacket 16.

A first supply channel 20 is provided in the stationary member, presently in the first housing portion 7. The first supply channel 20 is in fluid communication with an electrical pump (not shown). The electrical pump provides a supply of a cooling fluid, presently an oil, at a predetermined pressure. The first supply channel 20 connects to a second supply channel 21 formed in the further output shaft 6. In the present embodiment, the second supply channel 21 extends through the whole diameter of the further output shaft 6. A third supply channel 22 is provided in fluid communication with the second supply channel 21. The third supply channel 22 extends in an axial direction 90 through the output shaft 5. The third supply channel 22 is configured for receiving cooling fluid from the second supply channel 21. Thus, the third supply channel 22 serves as a receiving channel in the present embodiment.

A fourth supply channel 23 is presently provided in the stationary member, namely in the first housing portion 7. In the present embodiment, the fourth supply channel 23 extends along an outer surface of the first housing portion 7. The fourth supply channel 23 is in fluid communication with the second supply channel 21 and a fifth supply channel 24 extending in the axial direction 90 through the first housing portion 7. One end of the fifth supply channel 24 is closed by a cap. The other end of the fifth supply channel 24 is connected to a sixth supply channel 25 formed in the second housing portion 18. The sixth supply channel 25 is connected to a seventh supply channel 26 presently extending in a radial direction inwardly to a ring channel 28. The ring channel 28 extends annularly around the output shaft 5. A plurality of ejecting devices 27 are provided along a circumference of the ring channel 28 for ejecting cooling fluid into distribution channels 85, 86 formed in the planetary pins 84 on the second planetary gear set 80. Thereby, the needle bearings 87 of the second planetary gear set 80 are lubricated.

A first lubrication channel 30 is formed in the output shaft 5 for lubricating the bearing 50. In the present embodiment, the first lubrication channel 30 extends radially from the receiving channel 22 to an outer circumferential surface of the output shaft 5 at the axial height of the bearing 50. Cooling fluid used for lubricating the bearing 50 is drained via a first drain channel 40 to return to a sump 45. The sump 45 is provided at a lower end of the second housing portion 18. The electrical pump is in fluid communication with the sump 45. A second lubrication channel 31 is formed in the output shaft 5 for lubricating the second rotor shaft bearing 53 and the output shaft bearing 51. The second lubrication channel 31 extends radially in both directions of the output shaft 5 to an outer circumferential surface thereof. Cooling fluid used for lubricating the second rotor shaft bearing 53 and the output shaft bearing 51 is drained to the sump 45 by drain channels 42, 43, 44 formed in the third housing portion 19. A third lubrication channel 32 is formed in both radial directions of the output shaft 5 so as to extend to an outer circumferential surface thereof. The third lubrication channel 32 is arranged axially between the gearing 3 and the electrical motor 10, presently closer to the gearing 3 in the axial direction 90. The third lubrication channel 32 opens into an annular cavity 35 formed radially between the output shaft 5 and the rotor shaft 12. The annular cavity 35 is configured to provide a heat exchange path along a radially inner circumferential surface 36 of the rotor shaft 12. Furthermore, the annular cavity 35 extends in the axial direction 90 along the whole axial length of the rotor 11. The annular cavity 35 is configured to receive cooling fluid from the third lubrication channel 32 on one axial end of the annular cavity 35. The annular cavity 35 is configured to discharge cooling fluid through a drain channel 46 arranged at the other axial end of the annular cavity 35. The drain channel 46 opens to a drain channel 41, which is provided as a ring channel surrounding the rotor shaft 12 at the height of the drain channel 46. Further to providing cooling for the rotor 11 by cooling the rotor shaft 12, the annular cavity 35 is also configured to provide lubrication. In the present embodiment, a lubrication channel 33 is formed in the rotor shaft 12 in the vicinity of the first rotor shaft bearing 52 so as to provide a fluid communication path between the annular cavity 35 and the first rotor shaft bearing 52 for lubrication. In addition, in the present embodiment, a lubrication channel 34 is formed in the rotor shaft 12 in the vicinity of the gearing 3 so as to provide a fluid communication path between the annular cavity 35 and the elements 71, 72, 73 of the first planetary gear set 70, for example for lubricating the planetary bearing 77 of the first planetary gear set 70.

With the above-described structure, the electrical drive axle 2 of the present embodiment achieves a high cooling capacity for the rotor 11. Furthermore, the optional lubricating function is provided for all bearings of the rotor shaft 12 and the output shaft 5. In addition, a lubricating function is provided for all rotating elements of the gearing 3. Accordingly, the present embodiment combines a high cooling capacity, enabling a high power density, with a compact structure of the electrical drive axle.

### Reference signs

- 1: vehicle
- 2: electrical drive axle
- 3: gearing
- 4: input shaft
- 5, 6: output shaft
- 7, 18, 19: stationary member
- 8, 9: drive element
- 10: electrical motor
- 11: rotor
- 12: rotor shaft
- 13: stator
- 14: windings
- 15: insulating member
- 16: cooling jacket
- 17: coolant cavity

- 20, 21, 22, 23, 24, 25, 26: supply channel

- 27: ejecting device
- 28: ring channel

- 30, 31, 32, 33, 34: lubrication channel

- 35: annular cavity
- 36: surface

- 40, 41, 42, 43, 44, 46: drain channel

- 45: sump
- 50: bearing
- 51: output shaft bearing
- 52, 53: rotor shaft bearing
- 70, 80: planetary gear set
- 71, 81: first element
- 72, 82: second element
- 73, 83: third element
- 74, 84: planetary pin
- 77, 87: planetary bearing
- 85, 86: distribution channel
- 90: axial direction

## Claims

1. An electrical drive axle (2) for a vehicle (1), comprising an electrical motor (10) with a rotor (11) mechanically connected to a rotor shaft (12) and a gearing (3) with an input shaft (4) and an output shaft (5) being arranged coaxially to the rotor shaft (12), wherein the input shaft (4) is operatively connected to the rotor shaft (12), and wherein the output shaft (5) is configured to receive cooling fluid and to enable at least a part of the received cooling fluid to flow from the output shaft (5) to the rotor shaft (12) for cooling the rotor (11).

2. The electrical drive axle (2) according to claim 1, **characterized by** comprising a heat exchange path (35) for guiding at least a part of the received cooling fluid along a surface (36) of the rotor shaft (12) so as to cool the rotor shaft (12).

3. The electrical drive axle (2) according to claim 2, **characterized in that** the heat exchange path (35) is formed as an annular cavity arranged radially between the output shaft (5) and the rotor shaft (12).

4. The electrical drive axle (2) according to any one of the preceding claims, **characterized by** comprising a bearing (50) for rotatably supporting the rotor shaft (12) with respect to an element (72) of the gearing (3), wherein the output shaft (5) is configured to enable at least a part of the received cooling fluid to flow through the output shaft (5) for lubricating the bearing (50).

5. The electrical drive axle (2) according to any one of the preceding claims, **characterized by** comprising an output shaft bearing (51) for rotatably supporting the output shaft (5) with respect to a stationary member (7; 18; 19), wherein the output shaft (5) is configured to enable at least a part of the received cooling fluid to flow through the output shaft (5) for lubricating the output shaft bearing (51).

6. The electrical drive axle (2) according to any one of the preceding claims, **characterized by** comprising a rotor shaft bearing (52; 53) for rotatably supporting the rotor shaft (12) with respect to a stationary member (7; 18; 19), wherein at least one of the output shaft (5) and the rotor shaft (12) is configured to enable at least a part of the received cooling fluid to flow through the at least one of the output shaft (5) and the rotor shaft (12) for lubricating the rotor shaft bearing (52; 53).

7. The electrical drive axle (2) according to any one of the preceding claims, **characterized in that** the electrical drive axle (2) is configured to enable at least a part of the received cooling fluid to flow through at least one of the output shaft (5) and the rotor shaft (12) for lubricating an element (71; 72; 73) of the gearing (3).

8. The electrical drive axle (2) according to any one of the preceding claims, **characterized by** comprising a cooling jacket (16) for cooling a stator (13) of the electrical motor (10) by means of a coolant flowing through the cooling jacket (16).

9. The electrical drive axle (2) according to claim 8, **characterized by** comprising a heat exchanger for exchanging heat between the cooling fluid and the coolant.

10. The electrical drive axle (2) according to any one of the preceding claims, **characterized by** comprising a sump (45) and a drain channel (40; 41; 42; 43; 44) for draining cooling fluid into the sump (45).

11. The electrical drive axle (2) according to any one of the preceding claims, **characterized by** comprising a supply channel (20) formed in a housing portion (7) of the gearing (3) for supplying at least the output shaft (5) with cooling fluid.

12. The electrical drive axle (2) according to any one of the preceding claims, **characterized in that** the gearing (3) comprises a first planetary gear set (70) and a second planetary gear set (80), wherein the first planetary gear set (70) comprises at least a first element (71), a second element (72) and a third element (73) and the second planetary gear set (80) comprises at least a first element (81), a second element (82) and a third element (83), wherein the input shaft (4) is non-rotatably connected to the first element (71) of the first planetary gear set (70), the second element (72) of the first planetary gear set (70) is non-rotatably connected to the output shaft (5), the third element (73) of the first planetary gear set (70) is non-rotatably connected to the first element (81) of the second planetary gear set (80), the second element (82) of the second planetary gear set (80) is non-rotatably connected to a stationary member (7;18; 19), and the third element (83) of the second planetary gear set (80) is non-rotatably connected to a further output shaft (6).

13. The electrical drive axle (2) according to claim 12, **characterized in that** each first element (71, 81) of the planetary gear sets (70, 80) is a sun gear, each second element (72, 82) of the planetary gear sets (70, 80) is a planetary carrier and each third element (73, 83) of the planetary gear sets (70, 80) is a ring gear.

14. The electrical drive axle (2) according to claim 13, **characterized in that** at least one planetary carrier comprises a planetary pin (84) configured to receive cooling fluid from a housing portion (18) of the electrical motor (10) and to enable a flow of at least a part of the cooling fluid received by the planetary pin (84) to a planetary bearing (87) mounted on the planetary pin (84).

15. A vehicle (1) comprising an electrical drive axle (2) according to any one of the preceding claims.

## Amended claims

### Amended claims in accordance with Rule 137(2) EPC.

1. An electrical drive axle (2) for a vehicle (1), comprising an electrical motor (10) with a rotor (11) mechanically connected to a rotor shaft (12) and a gearing (3) with an input shaft (4) and an output shaft (5) being arranged coaxially to the rotor shaft (12), wherein the rotor shaft (12) is formed as a hollow shaft, wherein the output shaft (5) extends at least partly through the rotor shaft (12), wherein the input shaft (4) is operatively connected to the rotor shaft (12), and wherein the output shaft (5) is configured to receive cooling fluid and to enable at least a part of the received cooling fluid to flow from the output shaft (5) to the rotor shaft (12) for cooling the rotor (11), wherein the electrical drive axle (2) comprises a bearing (50) for rotatably supporting the rotor shaft (12) with respect to an element (72) of the gearing (3), the element (72) of the gearing (3) being an element mechanically connected to the output shaft (5) for transferring torque, and wherein the output shaft (5) is configured to enable at least a part of the received cooling fluid to flow through the output shaft (5) for lubricating the bearing (50).

2. The electrical drive axle (2) according to claim 1, **characterized in that** the element (72) of the gearing (3) is a planetary carrier axially and non-rotatably connected to the output shaft (5).

3. The electrical drive axle (2) according to claim 1 or 2, **characterized by** comprising a heat exchange path (35) for guiding at least a part of the received cooling fluid along a surface (36) of the rotor shaft (12) so as to cool the rotor shaft (12).

4. The electrical drive axle (2) according to claim 3, **characterized in that** the heat exchange path (35) is formed as an annular cavity arranged radially between the output shaft (5) and the rotor shaft (12).

5. The electrical drive axle (2) according to any one of the preceding claims, **characterized by** comprising an output shaft bearing (51) for rotatably supporting the output shaft (5) with respect to a stationary member (7; 18; 19), wherein the output shaft (5) is configured to enable at least a part of the received cooling fluid to flow through the output shaft (5) for lubricating the output shaft bearing (51).

6. The electrical drive axle (2) according to any one of the preceding claims, **characterized by** comprising a rotor shaft bearing (52; 53) for rotatably supporting the rotor shaft (12) with respect to a stationary member (7; 18; 19), wherein at least one of the output shaft (5) and the rotor shaft (12) is configured to enable at least a part of the received cooling fluid to flow through the at least one of the output shaft (5) and the rotor shaft (12) for lubricating the rotor shaft bearing (52; 53).

7. The electrical drive axle (2) according to any one of the preceding claims, **characterized in that** the electrical drive axle (2) is configured to enable at least a part of the received cooling fluid to flow through at least one of the output shaft (5) and the rotor shaft (12) for lubricating an element (71; 72; 73) of the gearing (3).

8. The electrical drive axle (2) according to any one of the preceding claims, **characterized by** comprising a cooling jacket (16) for cooling a stator (13) of the electrical motor (10) by means of a coolant flowing through the cooling jacket (16).

9. The electrical drive axle (2) according to claim 8, **characterized by** comprising a heat exchanger for exchanging heat between the cooling fluid and the coolant.

10. The electrical drive axle (2) according to any one of the preceding claims, **characterized by** comprising a sump (45) and a drain channel (40; 41; 42; 43; 44) for draining cooling fluid into the sump (45).

11. The electrical drive axle (2) according to any one of the preceding claims, **characterized by** comprising a supply channel (20) formed in a housing portion (7) of the gearing (3) for supplying at least the output shaft (5) with cooling fluid.

12. The electrical drive axle (2) according to any one of the preceding claims, **characterized in that** the gearing (3) comprises a first planetary gear set (70) and a second planetary gear set (80), wherein the first planetary gear set (70) comprises at least a first element (71), a second element (72) and a third element (73) and the second planetary gear set (80) comprises at least a first element (81), a second element (82) and a third element (83), wherein the input shaft (4) is non-rotatably connected to the first element (71) of the first planetary gear set (70), the second element (72) of the first planetary gear set (70) is non-rotatably connected to the output shaft (5), the third element (73) of the first planetary gear set (70) is non-rotatably connected to the first element (81) of the second planetary gear set (80), the second element (82) of the second planetary gear set (80) is non-rotatably connected to a stationary member (7; 18; 19), and the third element (83) of the second planetary gear set (80) is non-rotatably connected to a further output shaft (6).

13. The electrical drive axle (2) according to claim 12, **characterized in that** each first element (71, 81) of the planetary gear sets (70, 80) is a sun gear, each second element (72, 82) of the planetary gear sets (70, 80) is a planetary carrier and each third element (73, 83) of the planetary gear sets (70, 80) is a ring gear.

14. The electrical drive axle (2) according to claim 13, **characterized in that** at least one planetary carrier comprises a planetary pin (84) configured to receive cooling fluid from a housing portion (18) of the electrical motor (10) and to enable a flow of at least a part of the cooling fluid received by the planetary pin (84) to a planetary bearing (87) mounted on the planetary pin (84).

15. A vehicle (1) comprising an electrical drive axle (2) according to any one of the preceding claims.
